# FASCICULE DE BREVET EUROPEEN

(11) **EP 1 039 821 B1**
(45) Date de publication et mention de la délivrance du brevet: **17.03.2004**
(21) Numéro de dépôt: 99936728.7
(22) Date de dépôt: 12.08.1999
(51) Int. Cl.: A47J 27/08

(54) **APPAREIL DE CUISSON SOUS PRESSION A FERMETURE A BAIONNETTES ET A BEC VERSEUR**
DRUCKKOCHGERÄT MIT BAJONETT-VERSCHLUSS UND GIESSTÜLLE
PRESSURE COOKER WITH BAYONET CLOSURE AND POURING SPOUT

(30) Priorité: 13.08.1998 FR 9810483
(43) Date de publication de la demande: 04.10.2000
(73) Titulaire: Seb S.A., 69132 Ecully Cedex (FR)
(72) Inventeur: ANOTA, Daniel, Jean-Marie, F-21800 Chevigny Saint-Sauveur (FR); PIGUET, Yvan, Marcel, Georges, F-52190 Cusey (FR)
(74) Mandataire: Martin, Didier
(86) Numéro de dépôt international: PCT/FR1999/001978
(87) Numéro de publication internationale: WO 2000/008982

(56) Documents cités:
- DE-U- 8 905 111
- FR-A- 624 155
- US-A- 2 395 602

## Description

La présente invention se rapporte au domaine technique général des appareils de cuisson sous pression, à usage domestique, tel que des autocuiseurs, comportant une cuve sur laquelle est rapporté un couvercle destiné à être fermé de manière hermétique sur la cuve par l'intermédiaire d'un système de fermeture à baïonnettes.

La présente invention concerne un appareil de cuisson sous pression comprenant une cuve destinée à être fermée par un couvercle par l'intermédiaire d'un système de fermeture à baïonnettes formé par au moins quatre rampes de cuve aptes à coopérer avec quatre rampes de couvercle, ladite cuve comportant un moyen de préhension.

### TECHNIQUE ANTERIEURE

Les appareils de cuisson sous pression à usage domestique, du genre autocuiseur, sont largement connus, et en particulier ceux dits "*à baïonnettes* ". Ces derniers mettent en oeuvre une série de rampes de cuve et de couvercle réparties angulairement sur la cuve et le couvercle. Lors de la fermeture du couvercle sur la cuve, la coopération entre les rampes de cuve et de couvercle assure la fermeture et le blocage en position relative des deux pièces, un joint annulaire assurant l'étanchéité de l'autocuiseur et permettant la montée en pression. Une telle conception est largement répandue et très utilisée dans le monde entier, en raison essentiellement de la facilité de fabrication de tels appareils.

Les autocuiseurs à baïonnettes sont de forme générale cylindrique, de diamètre et de taille variable. Le nombre de rampes de cuve et de couvercle est également généralement élevé, de l'ordre de 6 ou 8, les rampes de cuve étant également réparties sur des secteurs circulaires d'angle également variable. Au total, il s'avère que la répartition angulaire des rampes de cuve à la périphérie de la cuve est extrêmement aléatoire selon les tailles et modèles d'autocuiseurs, les critères de résistance mécanique intervenant en priorité dans le nombre, la dimension et la répartition des rampes de cuve et de couvercle sur les autocuiseurs à baïonnettes.

Cette particularité a pour conséquence de rendre toute opération de versement de liquide contenu dans la cuve relativement délicate. En effet, il s'avère en pratique que la position relative des organes de préhension de la cuve, en général une paire de poignée, n'est pas géométriquement telle qu'elle permet le versement naturel du liquide hors de la cuve. Pour des raisons de conception propres aux autocuiseurs à baïonnettes, il existe en effet toujours un décalage angulaire différent de 90° entre l'axe des poignées et la position d'au moins une rampe de cuve. C'est la raison pour laquelle les rampes de cuve ne participent généralement pas à l'opération de versement du liquide et, parfois même au contraire, contrarient le versement normal du liquide hors de la cuve. En outre, même si une rampe de cuve peut être utilisée, par hasard, et en partie en tant qu'élément d'aide au versement du liquide, il s'avère que le profil des rampes de cuve n'est absolument pas prévu ni approprié à une opération de versement. En effet, les rampes de cuve devant assumer une fonction de rigidité et de résistance mécanique, elles possèdent un profil approprié à cette seule fonction, à savoir un " *profil en col de cygne* ". Un tel profil n'est pas apte à assumer une fonction de versement.

Enfin, il a également été constaté que l'opération de versement de liquide à partir des cuves d'autocuiseurs s'effectuait souvent de manière difficile alors même que ces appareils sont lourds et relativement encombrants et par ailleurs destinés à être manipulés, notamment à des fins de versement ou transvasement, dans des zones où l'espace réservé à la manipulation est réduit. Il a également été constaté qu'en règle générale, les autocuiseurs à baïonnettes ne possédaient pas d'organes de versement spécifique, ni par ailleurs d'organes spécifiques de versement adaptés indifféremment à des utilisateurs qui peuvent être droitiers ou gauchers.

Par ailleurs, on connaît par le document FR-A-624 155 un autocuiseur à baïonnettes muni de quatre rampes de cuve aptes à coopérer avec quatre rampes de couvercle. Ladite cuve comporte deux poignées diamétralement opposées, relativement auxquelles deux rampes de cuve diamétralement opposées sont décalées de 90°.

On connaît également par le document US-A-2,395,602 un autocuiseur muni d'une pluralité de rampes de cuve aptes à coopérer avec des rampes de couvercle correspondantes. Ladite cuve comporte une poignée relativement à laquelle une rampe de cuve est décalée de 90°.

### EXPOSE DE L'INVENTION

L'objet de l'invention vise en conséquence à proposer un nouvel appareil de cuisson sous pression à fermeture à baïonnettes portant remède aux différents inconvénients énumérés précédemment et qui permet d'améliorer les opérations de versement à partir de la cuve tout en simplifiant la conception de ces appareils quelle que soit leur taille.

Un autre objet de l'invention est de proposer un nouvel appareil de cuisson sous pression permettant de faciliter l'opération de fermeture de l'appareil.

Un autre objet de l'invention est de proposer un nouvel autocuiseur à baïonnettes permettant de réduire des opérations de fabrication des appareils de cuisson sous pression.

Les objets assignés à l'invention sont atteints à l'aide d'un appareil de cuisson sous pression conforme au libellé de la revendication 1.

### DESCRIPTIF SOMMAIRE DES DESSINS

Les objets assignés à l'invention seront explicités plus en détail à la lecture de la description qui suit à l'aide des dessins annexés ci-après, donnés à titre purement illustratifs et non limitatifs, dans lesquels :
- la figure 1 montre, selon une vue de coté, une vue partiellement arrachée d'un appareil de cuisson conforme à l'invention.
- la figure 2 illustre, selon une vue partielle en coupe, un détail de réalisation des rampes de cuve et de couvercle d'un appareil de cuisson conforme à l'invention.
- la figure 3 illustre, selon une vue de dessus, la disposition des rampes de cuve d'un appareil conforme à l'invention.
- la figure 4 illustre, selon une vue de dessus, la position relative du couvercle et de la cuve d'un appareil de cuisson conforme à l'invention avant fermeture.
- la figure 5 illustre, selon une vue partielle en coupe transversale, un détail de réalisation des rampes de cuve conforme à l'invention.
- la figure 6 illustre, selon une vue latérale, une cuve d'un appareil de cuisson pourvue de rampes de cuve conforme à l'invention.
- la figure 7 montre, selon une vue en perspective partielle, un autocuiseur pourvu de rampes de cuve conforme à l'invention.

### MEILLEURE MANIERE DE REALISER L'INVENTION

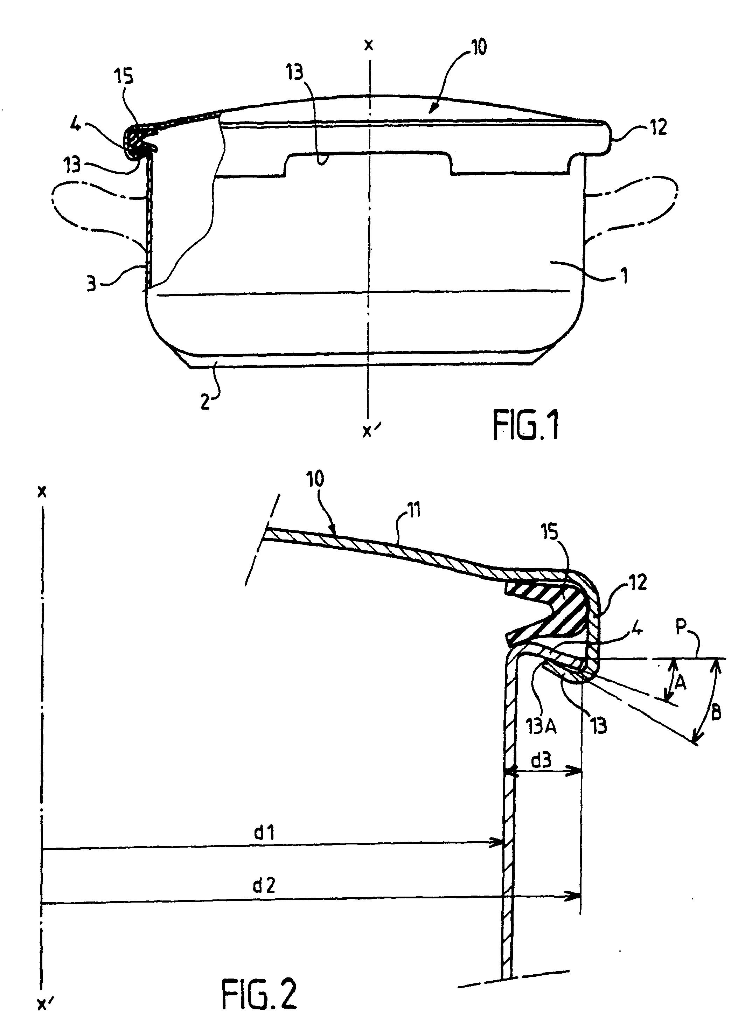

L'appareil de cuisson sous pression illustré aux figures 1 à 7 est un autocuiseur à usage domestique comportant une cuve 1, sensiblement circulaire, et réalisé à partir de matériau métallique, par exemple en acier inoxydable, ou en aluminium.

La cuve 1 comporte un fond 2, rapporté par exemple par frappe à chaud sur la partie inférieure de la cuve 1. Cette dernière est réalisée par exemple par emboutissage d'une tôle métallique de manière à réaliser une paroi 3 latérale et de préférence circulaire, d'épaisseur sensiblement constante.

Au cours de l'opération d'emboutissage, le bord supérieur de la cuve 1 est plié vers l'extérieur, en considération de l'axe de symétrie x-x' de l'appareil correspondant au centre de la cuve 1 pour permettre, après une opération appropriée de découpe, la réalisation de rampes de cuve 4. Si une étape d'étirage a lieu, l'épaisseur " *ep* " des rampes de cuve 4 sera de l'ordre de 1,3 à 1,6 mm pour de l'acier inoxydable et de l'ordre de 3,5 à 4,5 mm pour de l'aluminium, l'épaisseur des parois 3 étant légèrement inférieure, par exemple de l'ordre de 0,9 mm pour l'acier inoxydable.

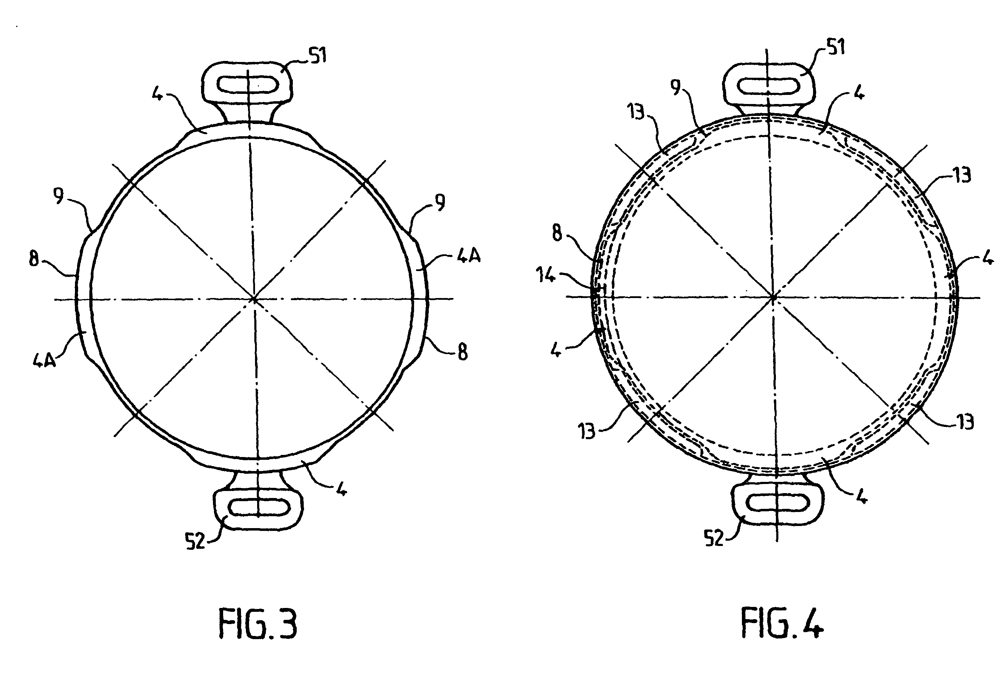

Selon l'invention, les rampes de cuve 4 sont repliées de manière à s'étendre radialement et en oblique, en considération du centre de la cuve 1 et de l'axe x-x', vers l'extérieur et vers le bas de l'appareil. Les rampes de cuve 4 sont réparties de manière régulière ou non à la périphérie de la cuve 1. Selon une variante préférentielle de l'invention, telle qu'illustrée aux figures 3, 4, 6 et 7 par exemple, la cuve 1 comporte quatre rampes de cuve 4 réparties angulairement de préférence de manière régulière, et espacée chacune de 90°.

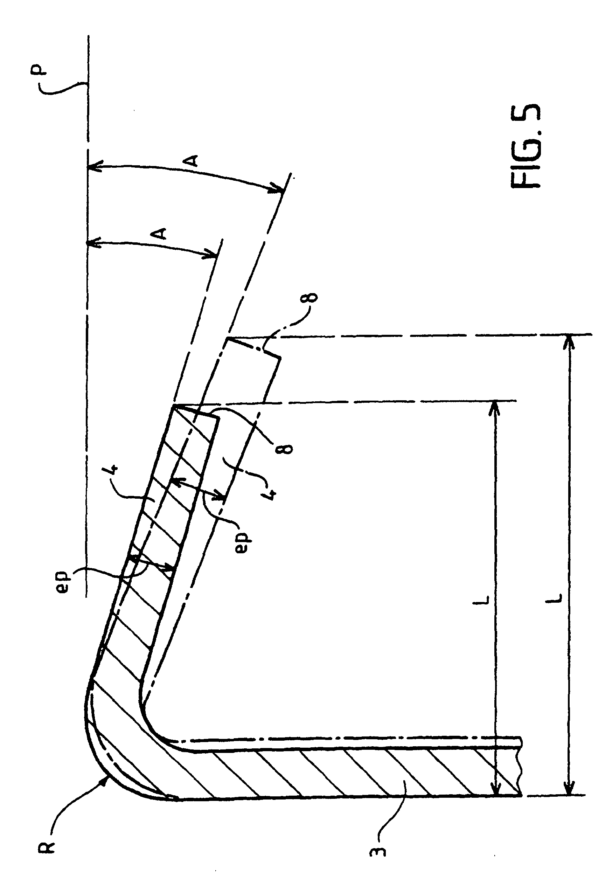

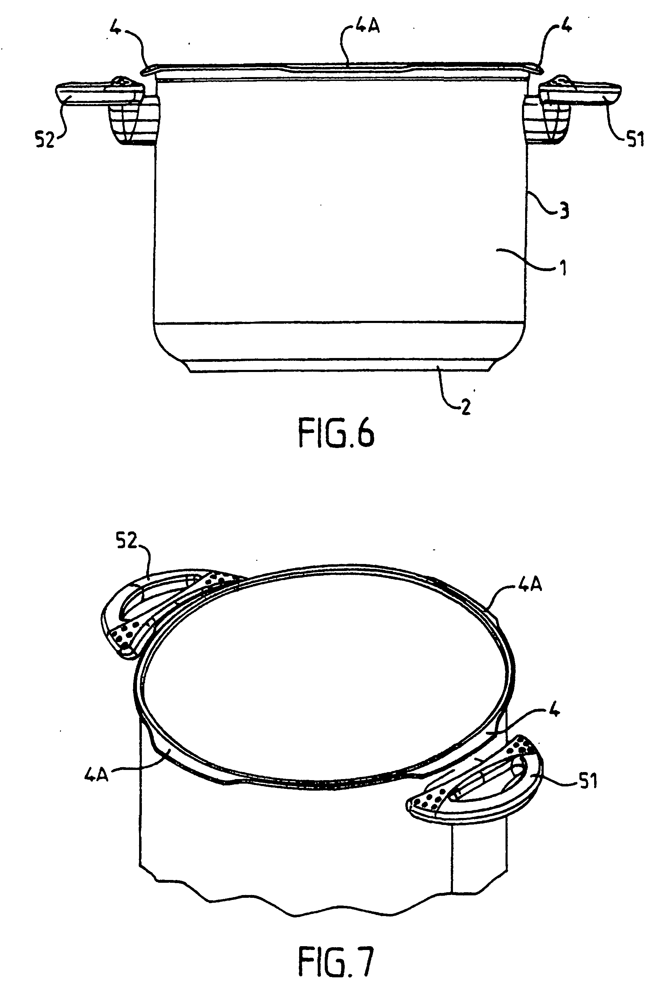

Selon l'invention, la largeur " *L* " des rampes de cuve 4, correspondant à la distance (figures 5 et 7 en particulier) entre la face interne de la cuve 1 et l'extrémité du bord périphérique 8 marquant la limite extrême de l'extension radiale des rampes de cuve 4, sera de l'ordre de 13 à 16 mm. La largeur " *L* " des rampes de cuve 4 sera sensiblement constante, quel que soit le matériau métallique utilisé (acier inoxydable ou aluminium par exemple), seule l'épaisseur " *ep* " des rampes de cuve 4 étant susceptible de varier selon le matériau utilisé pour tenir compte de la faculté de résistance et de déformation élastique du matériau métallique.

Selon l'invention, l'appareil de cuisson sous pression comporte également un couvercle 10 de diamètre adapté au diamètre de la cuve 1 de manière à former en position de fermeture et avec un système de fermeture à baïonnettes, un appareil de cuisson étanche. Le couvercle 10 est également, de manière avantageuse, obtenu par emboutissage et comporte à partir de sa face supérieure 11 un bord tombé périphérique 12 dont le bord inférieur est plié localement, de préférence à intervalle régulier, pour former une série de rampes de couvercle 13.

Avantageusement, et de la même manière que pour les rampes de cuve 4, les rampes de couvercle 13 s'étendent radialement et en oblique, mais selon une direction opposée, à savoir vers l'intérieur et vers le haut de l'appareil en considération du centre de la cuve. Les rampes de cuve 4 constituent ainsi, avec les rampes de couvercle 13, un système de fermeture à baïonnettes, formé de préférence par un ensemble apparié de quatre rampes de cuve 4 et de quatre rampes de couvercle 13.

De manière classique, l'appareil de cuisson conforme à l'invention comporte un joint annulaire 15 à lèvres, interposé, à la périphérie de l'autocuiseur, entre le couvercle 10 et le bord supérieur de la cuve 1 pour réaliser l'étanchéité de l'appareil et permettre la montée en pression.

De manière également connue en tant que tel, le système de fermeture à baïonnettes est conçu et dimensionné de telle façon pour que, en position de fermeture, les rampes de couvercle 13, telles que montrées en particulier à la figure 2, viennent en appui sur la face inférieure des rampes de cuve 4 pour assurer la fermeture et l'étanchéité de l'autocuiseur.

Selon l'invention, la cuve 1 comporte un moyen de préhension formé de préférence par une paire de poignées 51, 52, par exemple ouvertes, et solidaires, par tous moyens appropriés, de la face extérieure de la cuve 1. Les poignées 51, 52 sont diamétralement opposées relativement au centre de la cuve. Selon une caractéristique importante de l'invention, la position des poignées 51, 52 est choisie de telle façon que la cuve 1 comportant quatre rampes de cuve 4, au moins deux rampes de cuve référencées 4A sont également diamétralement opposées et décalées de 90° relativement au moyen de préhension, à savoir lesdites poignées 51, 52. Au sens de l'invention, les valeurs angulaires de décalage se réfèrent à la valeur angulaire correspondant à l'angle formé par les axes médians respectifs des poignées 51, 52 et des rampes 4A. De cette façon, les rampes de cuve 4A occupent une position géométrique idéale et centrale de versement, lesdites rampes de cuve 4A étant en outre conformées et de longueur suffisante de manière à servir de bec verseur, indifféremment pour un droitier ou un gaucher.

Tel que cela est particulièrement bien montré aux figures 3, 6 et 7, la variante préférentielle de l'invention se rapporte à un autocuiseur comportant quatre rampes de cuve décalées angulairement et régulièrement entre elles de 90°, ainsi qu'un moyen de préhension formé de deux organes de préhension diamétralement opposés et situés à la même position angulaire que deux rampes de cuve 4.

Selon l'invention, les rampes de cuve 4 se terminent par un bord périphérique 8 délimitant la limite extrême de leur extension radiale, ledit bord périphérique 8 étant situé sur un diamètre *d2* relativement au centre de la cuve 1 matérialisé par l'axe x-x' et correspondant au diamètre extérieur de la cuve 1. De la même façon, le diamètre intérieur *d1* de la cuve sera matérialisé par la distance *d1* séparant l'axe x-x' de la face interne des parois 3 (figure 2).

Selon une caractéristique importante de l'invention, les rampes de cuve 4 d'épaisseur "*ep*" et de largeur "*L*" posséderont des valeurs dimensionnelles spécifiques. Ainsi, le rapport " *L*/*ep* " sera compris entre 2,5 et 13, et de préférence entre 8 et 13 pour de l'acier inoxydable (figures 5 et 7). De manière encore plus préférentielle, le rapport " *L*/*ep* " sera compris entre 8 et 10 pour des rampes de cuve 4 en acier inoxydable. Ainsi, le respect d'un ratio de dimension et d'extension relative des rampes de cuve 4 en considération de l'épaisseur de la cuve de chaque autocuiseur permet, en combinaison avec l'obliquité desdites rampes, d'obtenir une flexibilité relative et potentielle des rampes de cuve 4.

En raison des caractéristiques mécaniques différentes de l'aluminium en regard de l'acier inoxydable, et en particulier en raison de la moindre résistance de l'aluminium et de son comportement élastique réduit, les épaisseurs de rampes de cuve 4 réalisées en aluminium seront plus importantes.

L'allongement relatif de la largeur des rampes de cuve 4 induit également une augmentation de l'écart dimensionnel entre le bord de cuve 1 et le bord tombé 12 ce qui permet :
- de mieux dimensionner la largeur des rampes de couvercle 13,
- d'assurer un meilleur recouvrement entre les rampes de cuve 4 et les rampes de couvercle 13, malgré les dispersions éventuelles de fabrication et d'associer, dans les cas extrêmes, une cuve de diamètre minimal avec un couvercle de diamètre maximale,
- de ménager un espace plus important entre le diamètre de l'entre-rampe de la cuve 1 et le bord tombé 12 pour loger d'éventuels dispositifs annexes.

Cet allongement relatif pourra se traduire par une distance *d3*, de l'ordre de 13 à 16 mm par exemple, entre le diamètre intérieur de cuve 1 et le diamètre intérieur du couvercle 10.

La figure 5 montre, pour une cuve en acier inoxydable, deux exemples de réalisation de rampes de cuve 4, l'une en trait plein, d'épaisseur " *ep* " de l'ordre de 1,3 mm, l'autre en trait pointillé, d'épaisseur " *ep* " de l'ordre de 1,6 mm, leur largeur respective " *L* " étant de l'ordre de 13 et 16 mm.

En cas de surpression et de défaillance simultanée des autres dispositifs de sécurité de l'autocuiseur, les rampes de cuve 4 peuvent ainsi se déformer de manière élastique vers le haut de l'appareil et faire ainsi apparaître une "*déformée* " dont la valeur est amplifiée par rapport aux constructions classiques. Ceci permet d'éviter, contrairement aux systèmes classiques connus actuellement, une déformation brutale s'accompagnant d'un échappement violent des rampes de couvercle 13 en cas de forte surpression. Par ailleurs, une telle déformation élastique permet d'obtenir une fuite progressive de pression.

Selon une version avantageuse de l'invention, les rampes de cuve 4 et de couvercle 13 s'étendent en oblique de manière conjuguée, de manière à parfaire la coopération desdites rampes et améliorer la progressivité et l'élasticité de la déformation.

Selon une autre version particulièrement avantageuse de l'invention, les rampes de couvercle 13 s'étendent en oblique selon une valeur angulaire supérieure à la valeur angulaire de l'obliquité des rampes de cuve 4.

Ainsi, la valeur angulaire de l'obliquité des rampes de couvercle 13, exprimée par l'angle B formé par le plan d'extension des rampes de couvercle 13 avec le plan horizontal P (figure 2), est comprise entre 15° et 25°, et de préférence entre 15° et 20°.

Selon ces mêmes caractéristiques, la valeur angulaire de l'obliquité des rampes de cuve 4 (figures 2 et 5), exprimée par l'angle A formé par le plan d'extension moyen des rampes de cuve 4 avec le même plan P, est comprise entre 10° et 20°, et de préférence entre 10° et 15°.

Cette relation angulaire permet de reporter sensiblement vers l'intérieur de l'appareil la ligne d'application 14 (figure 4) des rampes de couvercle 13, en l'occurrence par leur bord terminal 13A sur les rampes de cuve 4. La ligne d'application 14 est ainsi située sensiblement dans une zone correspondant au tiers central de la largeur de chaque rampe de cuve 4. Avantageusement, la ligne d'application 14 sera située vers la moitié de la largeur des rampes de cuve 4. Ces valeurs constituent un compromis acceptable entre d'une part une déformation progressive et/ou une bonne flexibilité des rampes de cuve 4, et d'autre part une bonne rigidité et/ou tenue desdites rampes.

Selon l'invention, l'épaisseur " *ep* " des rampes de cuve 4 sera sensiblement égale à l'épaisseur de la paroi 3 de la cuve 1, aux variations d'épaisseurs près résultant éventuellement de l'opération d'emboutissage et d'étirage, et par exemple de l'ordre de 1,3 à 1,6 mm pour des cuves en inox.

Selon une variante particulièrement avantageuse de l'invention, la section transversale des rampes de cuve 4 et de couvercle 13 sera sensiblement plane, et ce dès la zone de raccordement, d'un rayon *R* de l'ordre de 2,2 à 3 mm par exemple, avec la paroi 3.

Selon une autre variante de réalisation particulièrement avantageuse, les sections transversales des rampes de cuve 4 et de couvercle 13 seront sensiblement coniques ou de forme proche, par exemple paraboliques.

Au sens de l'invention, la conicité des rampes de cuve 4 et 4A (voir en particulier figure 6) signifie que la face supérieure de versement des rampes de cuve 4A est susceptible de générer un cône de révolution dont le sommet est situé sur l'axe de symétrie x-x' de l'autocuiseur. Une telle particularité géométrique favorise bien évidemment l'aptitude au versement des rampes 4A tout en leur permettant d'assumer leur fonction première de rampes de fermeture en coopération avec les rampes de couvercle 13.

Selon une autre caractéristique secondaire de l'invention, le contour 9 des bords latéraux des rampes de cuve 4 forme un raccordement progressif avec le bord de cuve, ledit raccordement étant réalisé à partir de rayons de raccordement élevés compris entre 20 et 30 mm, et de préférence entre 22 et 28 mm par exemple. Une telle réalisation, en association ou non avec la section conique des rampes de cuve 4, permet de réaliser un bord particulièrement esthétique, favorisant de plus l'opération de nettoyage de l'ensemble de l'autocuiseur et surtout l'opération de versement en maintenant le flux dans un secteur angulaire précis de la rampe de cuve 4A.

La réalisation de rampes de cuve 4 et 4A, susceptibles par leurs caractéristiques géométriques et dimensionnelles ainsi que par leur positionnement relativement au moyen de préhension d'assumer des fonctions de bec verseur en plus de leur fonction classique d'organes de fermeture de l'autocuiseur, constitue un avantage d'utilisation non négligeable. En outre, il s'avère que la conception et la fabrication même d'un tel autocuiseur sont simplifiées dans la mesure où le nombre de rampes est réduit et/ou leur positionnement identique et équidistant à la fois sur la cuve 1 et sur le couvercle 10. Une telle conception facilite l'opération de réalisation des cuves et des couvercles et, plus généralement, simplifie l'organisation des postes d'assemblage puisqu'au total le nombre d'opérations industrielles à effectuer est réduit. Il en est de même pour la réalisation des outillages nécessaires, lesquels sont également simplifiés, tout comme la remise en état des divers outils.

A titre de variante complémentaire non représentée aux figures, il est bien évidemment envisageable, sans sortir du cadre de l'invention, de réaliser un autocuiseur comportant plus de quatre rampes de cuve, ou encore de réaliser un autocuiseur comportant quatre rampes de cuve non nécessairement espacée chacune d'une valeur angulaire de 90°, dès l'instant qu'il existe au moins deux rampes de cuve 4A décalées de 90° relativement à l'organe de préhension.

L'invention permet en conséquence d'obtenir un appareil de cuisson sous pression, tel qu'un autocuiseur présentant des caractéristiques esthétiques nouvelles associées à des caractéristiques de sécurité améliorées, comparables aux niveaux de sécurité atteints avec d'autres types d'autocuiseur.

### POSSIBILITE D'APPLICATION INDUSTRIELLE

L'invention trouve son application industrielle dans la fabrication d'appareils domestiques de cuisson sous pression, en particulier d'autocuiseurs.

## Revendications

1. Appareil de cuisson sous pression comprenant une cuve (1) destinée à être fermée par un couvercle (10) par l'intermédiaire d'un système de fermeture à baïonnettes formé par au moins quatre rampes de cuve (4, 4A) aptes à coopérer avec quatre rampes de couvercle (13), ladite cuve (1) comportant un moyen de préhension (51, 52) au moins deux rampes de cuve (4A) étant diamétralement opposées et décalées de 90° relativement au moyen de préhension (51, 52), **caractérisé en ce que** lesdites rampes de cuve (4A) sont en outre conformées et de longueur suffisante de manière à servir de bec verseur.

2. Appareil selon la revendication 1 **caractérisé en ce qu'**il comporte quatre rampes de cuve (4, 4A) décalées angulairement entre elles de 90° et un moyen de préhension formé par deux organes de préhension (51, 52), lesdits organes étant situés à la même position angulaire que deux rampes de cuve (4).

3. Appareil selon la revendication 1 ou la revendication 2 **caractérisé en ce que** les rampes de cuve (4, 4A) sont inclinées vers l'extérieur et vers le bas de l'appareil et présentent une forme sensiblement conique et régulière.

4. Appareil selon l'une des revendications 1 à 3 **caractérisé en ce que** les rampes de cuves (4, 4A) présentent un rapport de leur largeur " *L* " sur leur épaisseur " ***ep*** " compris entre 2,5 et 13, et de préférence entre 8 et 13.

5. Appareil selon la revendication 3 ou la revendication 4 **caractérisé en ce que** la valeur angulaire de l'obliquité des rampes de cuve (4, 4A) est comprise entre 10° et 20°, et de préférence entre 10° et 15°.

6. Appareil selon l'une des revendications 1 à 5 **caractérisé en ce que** le contour (9) des bords latéraux des rampes de cuve (4A, 4) forme un raccordement progressif de rayon compris entre 20 et 30 mm avec le bord de cuve (1).

7. Appareil selon la revendication 6 **caractérisé en ce que** le rayon de raccordement est compris entre 22 et 28 mm.

8. Appareil selon l'une des revendications 2 à 7 **caractérisé en ce que** les deux organes de préhension (51, 52) sont formés par des poignées.

9. Appareil selon l'une des revendications 1 à 8 **caractérisé en ce qu'**il est constitué par un autocuiseur.

## Claims

1. Pressurised cooking appliance comprising a vessel (1) intended to be closed by a lid (10) by means of a bayonet closure system formed by at least four vessel ramps (4, 4A) able to cooperate with four lid ramps (13), the said vessel (1) comprising a gripping means (51, 52), at least two vessel ramps (4A) being diametrically opposed and offset by 90° relative to the gripping means (51, 52), **characterised in that** the said vessel ramps (4A) are also conformed and of sufficient length to serve as a pouring spout.

2. Appliance according to Claim 1, **characterised in that** it comprises four vessel ramps (4, 4A) offset angularly from each other by 90° and a gripping means formed by two gripping members (51, 52), the said members being situated at the same angular position as two vessel ramps (4).

3. Appliance according to Claim 1 or Claim 2, **characterised in that** the vessel ramps (4, 4A) are inclined towards the outside and towards the bottom of the appliance and have a substantially conical and irregular shape.

4. Appliance according to one of Claims 1 to 3, **characterised in that** the vessel ramps (4, 4A) have a ratio of their width "L" to their thickness "ep" of between 2.5 and 13, and preferably between 8 and 13.

5. Apparatus according to Claim 3 or Claim 4, **characterised in that** the angular value of the obliqueness of the vessel ramps (4, 4A) is between 10° and 20°, and preferably between 10° and 15°.

6. Appliance according to one of Claims 1 to 5, **characterised in that** the contour (9) of the lateral edges of the vessel ramps (4A, 4) forms a progressive connection with a radius of between 20 and 30 mm with the edge of the vessel (1).

7. Appliance according to Claim 6, **characterised in that** the connection radius is between 22 and 28 mm.

8. Appliance according to one of Claims 2 to 7, **characterised in that** the two gripping members (51, 52) are formed by handles.

9. Appliance according to one of Claims 1 to 8, **characterised in that** it consists of a pressure cooker.

## Patentansprüche

1. Druckkochgerät mit einem Topf (1), der verschließbar ist mit einem Deckel (10) mittels einem Bajonettverschlusssystem, das gebildete ist aus mindestens vier Topframpen (4, 4A), die geeignet sind mit vier Deckelrampen (13) zusammenzuwirken, wobei der Topf (1) ein Greifwerkzeug (51, 52) aufweist und mindestens zwei Topframpen (4A), die sich diametral gegenüber liegen und um 90° relativ zum Greifwerkzeug (51, 52) versetzt sind, **dadurch gekennzeichnet, dass** die Deckelrampen (4A) im übrigen angepasst und ausreichend lang sind, so dass sie als Giestülle dienen können.

2. Gerät gemäß Anspruch 1, **dadurch gekennzeichnet, dass** vier Topframpen (4, 4A) vorgesehen sind, die untereinander versetzt sind um Winkel von 90° und ein Greifwerkzeug aufweisen, dass gebildete ist aus zwei Greiforganen (51, 52), wobei die Organe in der selben Winkelposition angeordnet sind wie zwei Topframpen (4).

3. Gerät gemäß Anspruch 1 oder Anspruch 2, **dadurch gekennzeichnet, dass** die Topframpen (4, 4A) nach außen und nach unten der Vorrichtung geneigt sind und eine im wesentlichen konische und regelmäßige Form aufweisen.

4. Gerät gemäß einem der Ansprüche 1 bis 3, **dadurch gekennzeichnet, dass** die Topframpen (4, 4A) ein Verhältnis ihrer Breite "L" zu ihrer Dicke "ep" zwischen 2,5 und 13 aufweisen und vorzugsweise zwischen 8 und 13.

5. Gerät gemäß Anspruch 3 oder Anspruch 4, **dadurch gekennzeichnet, dass** der Winkelwert der Schräge der Topframpen (4, 4A) zwischen 10° und 20° und vorzugsweise zwischen 10° und 15° ist.

6. Gerät gemäß einem der Ansprüche 1 bis 5, **dadurch gekennzeichnet, dass** der Umriss (9) der seitlichen Ränder der Topframpen (4A, 4) eine zunehmende Verbindung des Bereichs zwischen 20 und 30 mm mit dem Rand des Topfs (1) bilden.

7. Gerät gemäß Anspruch 6, **dadurch gekennzeichnet, dass** der Bereich der Verbindung zwischen 22 und 28 Millimeter ist.

8. Gerät gemäß einem der Ansprüche 2 bis 7, **dadurch gekennzeichnet, dass** die zwei Greiforganen (51, 52) durch Griffe geformt sind.

9. Gerät gemäß einem der Ansprüche 1 bis 8, **dadurch gekennzeichnet, dass** es als Druckkocher gebildet ist.
